# FASCICULE DE BREVET EUROPEEN

(11) **EP 0 553 003 B1**
(45) Date de publication et mention de la délivrance du brevet: **18.09.1996**
(21) Numéro de dépôt: 93400077.9
(22) Date de dépôt: 14.01.1993
(51) Int. Cl.: C03B 23/025, B60J 1/02, B60S 1/04, B32B 17/10

(54) **Procédé de fabrication d'un vitrage bombé en verre feuilleté**
Verfahren zum Herstellen einer gebogene laminierten Windschutzscheibe aus Glas
Method for making a curved laminated windscreen of glass

(30) Priorité: 18.01.1992 DE 4201275
(43) Date de publication de la demande: 28.07.1993
(73) Titulaire: SAINT-GOBAIN VITRAGE, F-92400 Courbevoie (FR); VEGLA Vereinigte Glaswerke GmbH, D-52066 Aachen (DE)
(72) Inventeur: Gillner, Manfred, W-5100 Aachen (DE); Vanaschen, Luc, B-4700 Eupen (BE); Havenith, Hubert, W-5102 Würselen (DE)
(74) Mandataire: Muller, René

(56) Documents cités:
- EP-A- 0 013 970
- EP-A- 0 351 739
- DE-A- 3 920 573
- US-A- 3 762 902
- US-A- 4 009 064

## Description

La présente invention concerne un procédé de fabrication d'un vitrage bombé en verre feuilleté dans lequel une des deux feuilles de verre individuelles reçoit, sur la surface contiguë à la couche intermédiaire thermoplastique, dans des zones choisies, une couche d'encre à cuire qui est cuite avant le bombage jumelé des feuilles de verre au cours d'une opération de traitement thermique préalable.

Lorsque des vitrages feuilletés bombés doivent recevoir une encre à cuire, sur une surface interne, c'est-à-dire sur une surface contiguë à la couche intermédiaire thermoplastique, il n'est pas possible d'effectuer la cuisson de la couche d'encre du genre émail au cours de l'opération de bombage. Les encres à cuire contiennent en fait des composants organiques qui forment, aux températures de cuisson, des produits de réaction gazeux qui ne peuvent pas s'échapper de l'espace intermédiaire prévu entre les deux feuilles de verre. En outre, il existe un risque accru que les deux feuilles de verre adhèrent l'une à l'autre au cours de la fusion de l'encre à cuire.

Le bombage jumelé avec cuisson simultanée de la couche d'émail est certes décrit comme un procédé possible dans le document EP-B1-0 013 970, mais uniquement dans le cas où l'encre à cuire est appliquée dans une zone centrale partielle du vitrage. Dans le cas de cuisson et de bombage jumelés, en fait, les deux feuilles de verre s'entrebâillent légèrement en raison des températures élevées de leurs surfaces externes comparativement à la température de leurs surfaces internes, permettent ainsi le dégagement des gaz de réaction et empêchent l'adhésion mutuelle des deux feuilles de verre. Par contre, lorsque l'encre à cuire s'étend sur de grandes zones superficielles, ce procédé n'est pas utilisable.

Dans le cas de grandes surfaces d'impression sur l'une des faces internes d'un vitrage feuilleté, on procède en principe de la manière suivante : avant le bombage de la paire de feuilles de verre, on soumet tout d'abord la feuille de verre individuelle imprimée, à plat, dont la surface imprimée est tournée vers le haut, individuellement, à un procédé de traitement thermique pour faire fondre la couche d'émail et la cuire. Après refroidissement, cette feuille de verre portant la couche d'émail cuite est assemblée avec la seconde feuille de verre et les deux feuilles de verre sont bombées ensemble, les produits de réaction ne sont plus libérés dans ce procédé de bombage conjoint et l'adhérence mutuelle des deux feuilles est évitée par un agent de séparation pulvérulent qui est éliminé par lavage après le bombage et avant le traitement ultérieur donnant le vitrage feuilleté.

Ce procédé qui a été divulgué, par exemple, par le document DE-A1-39 20 573 et qui consiste à cuire d'abord, dans une étape préalable du procédé, la couche d'émail sur la feuille de verre plane, impose des exigences élevées au four de cuisson approprié à l'opération. En effet la feuille de verre ne doit pas seulement rester absolument plane et sans déformation, elle ne peut pas non plus présenter de tensions internes, car celles-ci entraînent des déformations perturbatrices au cours du procédé de bombage ultérieur. On a montré à titre d'exemple que le transport des feuilles de verre chaudes sur des rouleaux de transport pouvait déjà entraîner d'infimes déformations de sorte que, par exemple, les pare-brise fabriqués par cette technique connue ne permettent pas de répondre aux stricts critères de qualité optique.

Il est connu du document EP-A2-0 351 739 un procédé de bombage de manière simultanée de deux feuilles de verre, qui comprend deux étapes : une première opération de bombage par gravité suivie d'un pressage par des moyens de pressage agissant sur des portions de feuilles afin d'obtenir un fort bombage. Les positions des deux feuilles de verre peuvent être interchangées après l'opération de bombage par gravité et cuisson de la couche d'émail céramique lorsque la feuille de verre supérieure comporte une telle couche d'émail céramique dans les portions devant être fortement bombées.

Il est connu du document GB-B-2 078 169 un procédé de fabrication d'un vitrage bombé en verre feuilleté comprenant des feuilles de verre de propriétés ou d'épaisseurs différentes. Dans ce procédé les feuilles de verre sont disposées les unes sur les autres dans un certain ordre pour être bombées à la courbure définitive, puis l'ordre des feuilles est inversé pour l'assemblage.

L'invention a pour but de procurer un procédé de bombage par gravité du type précité, qui est simple en pratique pour la fabrication de vitrages automobiles bombés comportant une couche interne d'une encre à cuire, qui permet la fabrication de vitrages feuilletés optiquement irréprochables sans déformations perturbatrices.

Suivant le procédé de l'invention, après l'application de l'encre à cuire sur la surface interne de la feuille de verre individuelle prévue pour le côté extérieur et séchage immédiat, on pose cette feuille de verre individuelle avec sa face revêtue vers le haut sur la feuille de verre individuelle prévue pour le côté intérieur, on soumet la paire de feuilles de verre à un pré-bombage sur une forme de bombage annulaire en faisant fondre et en cuisant l'encre simultanément, on applique, après refroidissement des feuilles de verre pré-bombées, sur la feuille de verre individuelle qui a reçu la couche d'encre à cuire, un agent de séparation résistant à la chaleur, on permute les deux feuilles de verre individuelles puis on bombe conjointement les deux feuilles de verre pré-bombées avec la couche d'encre à cuire tournée vers l'intérieur, sur une forme de bombage annulaire correspondant à la forme finale de la feuille de verre externe pour lui conférer la forme définitive.

Le procédé selon l'invention met donc à profit le procédé de bombage habituellement utilisé pour la fabrication de vitrages feuilletés bombés et mettant en oeuvre un bombage par gravité de la paire de feuilles de verre sur un anneau de bombage, afin de réaliser également de cette manière le processus de cuisson. De la sorte, non seulement la feuille de verre individuelle dotée de la couche d'encre est soutenue régulièrement de manière idéale au cours de l'opération de cuisson, mais, dès la cuisson de la couche d'encre, un pré-bombage de la feuille de verre revêtue est effectué, si bien que l'opération de bombage finale ultérieure peut être réalisée dans les meilleures conditions, c'est-à-dire le cas échéant à une température un peu plus basse et/ou avec des temps de bombage plus courts. De ce fait, le danger de collage des deux feuilles de verre par l'encre à cuire en cours de fusion est encore réduit.

Dans un développement avantageux de l'invention, on utilise à titre de forme de bombage annulaire pour l'opération de cuisson une forme de bombage dont la surface de bombage venant en contact avec la feuille de verre correspond à la forme finale de la feuille de verre interne du vitrage feuilleté, tandis que, pour la deuxième opération de bombage, on utilise une forme de bombage annulaire dont la surface de bombage correspond à la forme finale de la feuille de verre externe. De cette manière, on obtient une paire de feuilles de verre bombées dans laquelle, malgré l'opération de cuisson préalable, les deux feuilles de verre individuelles occupent une conformité optimale au niveau de leurs faces internes superposées et dans laquelle on évite de manière certaine des déformations des feuilles de verre qui entraînent des défauts de déflexion optiques ou des défauts dioptriques.

Le procédé selon l'invention s'utilise avec succès pour les objectifs les plus différents. Par exemple, il peut être utilisé dans la fabrication de vitrages feuilletés, dans lesquels une des deux feuilles de verre individuelles est dotée d'un cadre de décoration constitué d'une encre à cuire sur sa surface contiguë à la couche intermédiaire thermoplastique. Des vitrages dotés d'un cadre de décoration opaque sont toujours nécessaires lorsqu'ils sont reliés à la carrosserie par collage au cadre de la fenêtre. Dans divers cas, il peut être approprié de disposer ces cadres de décoration non pas, comme cela se pratique d'habitude, sur la surface extérieure du vitrage feuilleté tournée vers l'intérieur, mais au contraire à l'intérieur du vitrage feuilleté. Il s'est avéré particulièrement avantageux d'utiliser le procédé pour la fabrication d'un vitrage feuilleté chauffable électriquement dans lequel la résistance chauffante est constituée d'une couche de métal conducteur de l'électricité imprimée et cuite. Dans de tels vitrages feuilletés chauffants, on peut prévoir, en plus des couches conductrices cuites, des couches de décoration en forme de cadre, ou à deux dimensions, également constituées d'une encre à cuire. Pour la fabrication de telles vitres chauffantes, plusieurs opérations d'impression suivie chacune d'une opération de séchage immédiate sont fréquemment nécessaires. On a constaté que le procédé selon l'invention convient de manière remarquable même pour des vitrages feuilletés aussi complexes.

On décrira à présent deux exemples de réalisation dans lesquels le procédé selon l'invention s'applique.

### Exemple 1

Il s'agit de fabriquer un pare-brise chauffant en verre feuilleté, dans lequel une des deux feuilles de verre individuelles est dotée d'une couche chauffante transparente à structure multicouche, sur sa face contiguë à la pellicule thermoplastique.

Pour caractériser les diverses surfaces des deux feuilles de verre individuelles qui sont traitées pour former le vitrage feuilleté, on qualifiera ci-dessous et dans son ensemble par face I la face de la feuille de verre individuelle externe tournée vers l'extérieur dans le vitrage feuilleté fini une fois posé, tandis que la face de cette feuille de verre individuelle externe contiguë à la couche intermédiaire thermoplastique sera qualifiée de face II. Dans cette optique, la face III sera la face de la feuille de verre individuelle tournée vers l'intérieur du véhicule et contiguë à la couche intermédiaire thermoplastique. La face de cette feuille de verre interne tournée vers l'intérieur du véhicule sera qualifiée de face IV.

Dès que les deux feuilles de verre individuelles ont été découpées à la forme souhaitée, la feuille de verre individuelle plane prévue pour la feuille de verre externe dans le vitrage feuilleté fini reçoit par sérigraphie, sur la face II, tout d'abord une impression de décoration en forme de cadre périphérique constituée d'une encre à cuire. Au cours d'une opération de séchage, l'encre imprimée est séchée. Après séchage, dans une seconde opération d'impression sérigraphique, deux électrodes en forme de bandes constituées d'une encre contenant de l'argent métallique sont imprimées le long de deux bords opposés l'un à l'autre, ces électrodes devront servir par la suite d'électrodes d'alimentation de courant pour la couche chauffante. Cette couche d'argent conductrice imprimée est initialement soumise également à une opération de séchage.

La feuille de verre individuelle externe ainsi préparée est à présent appliquée, avec sa face imprimée II tournée vers le haut, sur la feuille de verre individuelle qui sera tournée vers l'intérieur par la suite, en particulier sur la face IV de celle-ci. La paire de feuilles de verre est ensuite posée sur une forme de bombage annulaire, dont la surface de bombage correspond à la forme finale de la face III de la feuille de verre interne ultérieure. A présent, la paire de feuilles de verre ainsi disposées conjointement avec la forme de bombage annulaire montée sur un chariot mobile sont déplacées à travers un four de bombage usuel dans lequel les feuilles de verre s'adaptent à la forme de bombage sous l'effet de leur propre poids lorsqu'elles atteignent la température de bombage. Au cours de l'opération de bombage, la couche de décoration et les couches conductrices de l'électricité sont fondues et cuites dans la surface de verre.

Lorsque les feuilles de verre sont sorties du four de bombage, on les laisse refroidir. La feuille de verre supérieure dotée des couches cuites reçoit un agent de séparation pulvérulent, par exemple du talc. Ensuite, la feuille de verre supérieure est soulevée et est déposée, dans cette position, c'est-à-dire avec la face I vers le bas, sur une autre forme de bombage annulaire, dont la surface de bombage diffère légèrement de la surface de la forme de bombage utilisée antérieurement et correspond exactement à la forme finale de la face I de la feuille de verre qui sera ultérieurement la feuille de verre externe. On pose à présent, sur cette feuille de verre, l'autre feuille de verre, qui se trouvait directement sur la forme de bombage lors de l'opération de cuisson de sorte qu'à présent, la face III repose sur la face II. Dans cette disposition, la paire de feuilles de verre est repassée avec la forme annulaire à travers le four de bombage où elle acquiert sa forme définitive.

Dès que les feuilles de verre ont été bombées de cette manière, elles sont séparées l'une de l'autre et lavées. Selon un procédé de revêtement approprié, en particulier selon le procédé de pulvérisation cathodique dans un champ magnétique, un système multicouche conducteur de l'électricité est appliqué à présent sur la face II par dessus les couches cuites. Le reste du traitement s'effectue de la manière connue.

### Exemple 2

Il s'agit de fabriquer une lunette arrière chauffable électriquement en verre feuilleté, dans laquelle la résistance chauffante est disposée à l'intérieur du verre feuilleté et est constituée de bandes conductrices d'une pâte à cuire qui ont été appliquées par impression et cuites.

Après avoir découpé les deux feuilles de verre individuelles à la forme voulue, on commence à nouveau par imprimer par sérigraphie une couche de décoration en forme de cadre constituée d'une encre à cuire sur la face II de la feuille de verre tournée vers l'extérieur et on sèche la couche d'encre. Après le séchage, on imprime également par sérigraphie, dans une seconde opération d'impression, sur la face II, un réseau conducteur qui est constitué de manière connue de bandes conductrices étroites, qui débouchent sur des collecteurs disposés latéralement. Cette couche conductrice imprimée est également soumise à une opération de séchage.

Ensuite, la feuille de verre imprimée, avec la face imprimée II vers le haut, est posée sur la face IV de l'autre feuille de verre. Les deux feuilles de verre sont à présent, comme décrit dans l'exemple 1, tout d'abord pré-bombées sur une première forme de bombage annulaire dont la surface de bombage correspond exactement à la forme de la feuille de verre tournée vers l'intérieur du vitrage feuilleté fini. Dans ce premier processus de bombage, on cuit simultanément les couches imprimées. Après refroidissement de la paire de feuilles de verre pré-bombées, les deux feuilles de verre individuelles sont permutées et sont bombées dans leur disposition mutuelle définitive sur une seconde forme de bombage annulaire dont la surface de bombage correspond exactement à la forme de la feuille de verre du vitrage feuilleté fini tournée vers l'extérieur.

Le reste du traitement devant donner le vitrage feuilleté se déroule de manière connue.

Les vitrages feuilletés bombés selon l'invention peuvent être utilisés en tant que vitrages pour véhicules de transport, notamment véhicules automobiles, trains, avions, ou encore en tant que vitrages feuilletés bombés pour le bâtiment.

## Revendications

1. Procédé de fabrication d'un vitrage bombé en verre feuilleté dans lequel une des deux feuilles de verre individuelles reçoit, sur la surface contiguë à la couche intermédiaire thermoplastique, dans des zones choisies, une couche d'encre à cuire qui est cuite avant le bombage jumelé des feuilles de verre dans une opération de traitement thermique préalable, caractérisé en ce que, après l'application de l'encre à cuire sur la surface interne de la feuille de verre individuelle prévue pour le côté extérieur et séchage immédiat, on pose cette feuille de verre individuelle avec sa face revêtue vers le haut sur la feuille de verre individuelle prévue pour le côté intérieur, on soumet la paire de feuilles de verre à un pré-bombage sur une forme de bombage annulaire en faisant fondre et en cuisant l'encre simultanément, on applique, après refroidissement des feuilles de verre pré-bombées, sur la feuille de verre individuelle qui a reçu la couche d'encre à cuire, un agent de séparation résistant à la chaleur, on permute les deux feuilles de verre individuelles puis on bombe conjointement les deux feuilles de verre pré-bombées avec la couche d'encre à cuire tournée vers l'intérieur, sur une forme de bombage annulaire correspondant à la forme finale de la feuille de verre externe pour lui conférer la forme définitive.

2. Procédé selon la revendication 1, caractérisé en ce qu'on utilise pour le pré-bombage de la paire de feuilles de verre, une forme de bombage dont la surface de bombage correspond à la forme finale de la surface de la feuille de verre interne contiguë à la couche intermédiaire.

3. Emploi du procédé selon la revendication 1 ou 2 pour la fabrication de vitrages feuilletés bombés comportant un cadre de décoration disposé sur la face de la feuille de verre externe contiguë à la couche thermoplastique intermédiaire.

4. Emploi du procédé selon la revendication 1 ou 2 pour la fabrication de vitrages feuilletés bombés chauffables électriquement, comportant des électrodes d'alimentation de courant cuites, disposées sur la surface de la feuille de verre externe contiguë à la couche thermoplastique intermédiaire et prévues pour une couche conductrice transparente appliquée ensuite selon un procédé sous vide.

5. Emploi du procédé selon la revendication 1 ou 2 pour la fabrication de vitrages feuilletés bombés chauffables électriquement comportant des conducteurs chauffants imprimés et cuits, disposés sur la face de la feuille de verre externe contiguë à la couche thermoplastique intermédiaire.

## Claims

1. Method of making a curved pane of laminated glass, in which one of the two individual glass sheets receives, on the surface contiguous to the thermoplastic intermediate film, in selected zones, a coating of a baking finish which is baked in a preceding heat treatment operation before the glass sheets are bent as a pair, characterized in that, after the application of the baking finish onto the inner surface of the single glass sheet intended for the outside and immediate drying, this single glass sheet is laid, with the coated face upwards, on the single glass sheet intended for the inner side, the pair of glass sheets is subjected to a prebending on a frame-shaped bending mould with simultaneous melting and baking-in of the baking finish that, after cooling of the prebent glass sheets, there is applied onto the single glass sheet which has received the film of baking finish, a heat-resistant parting agent, the two single glass sheets are transposed, and then the two prebent glass sheets, with the baked-in coating on the inside, are jointly bent on a frame-shaped bending mould corresponding to the final shape of the outer glass sheet, to give it the definitive shape.

2. Method according to claim 1, characterized in that, for the prebending of the pair of glass sheets, a bending mould is used, the bending surface of which corresponds to the final shape of the surface of the inner glass sheet contiguous with the intermediate film.

3. Application of the method according to claim 1 or 2 to the production of bent, laminated panes having a decorative frame disposed on the surface of the outer glass sheet contiguous to the thermoplastics intermediate film.

4. Application of the method according to claim 1 or 2 to the production of electrically heatable, bent laminated panes having baked-in current supply electrodes, disposed on the surface of the outer glass sheet contiguous to the intermediate thermoplastic film and intended for a transparent conducting film subsequently applied by a vacuum process.

5. Application of the method according to claim 1 or 2 to the production of electrically heatable, bent laminated panes having printed-on and baked-in heating conductors disposed on the surface of the outer glass sheet contiguous to the intermediate thermoplastic film.

## Patentansprüche

1. Verfahren zur Herstellung einer gebogenen Glasscheibe aus Verbundglas, bei der eine der beiden Einzelglasscheiben auf der an der thermoplastischen Zwischenschicht anliegenden Oberfläche in ausgewählten Bereichen mit einer Schicht aus einer Einbrennfarbe versehen ist, die vor dem paaarweisen Biegen der Glasscheiben in einem voraufgehenden Wärmebehandlungsvorgang eingebrannt wird,
**dadurch gekennzeichnet,** daß nach dem Auftragen der Einbrennfarbe auf die innere Oberfläche der für die Außenseite vorgesehenen Einzelglasscheibe und anschließendem Trocknen diese Einzelglasscheibe mit der beschichteten Seite nach oben auf die für die Innenseite vorgesehene Einzelglasscheibe aufgelegt und das Glasscheibenpaar auf einer ringförmigen Biegeform unter gleichzeitigem Aufschmelzen und Einbrennen der Einbrennfarbe vorgebogen wird, und daß nach dem Abkühlen der vorgebogenen Glasscheiben die mit der eingebrannten Schicht versehene Einzelglasscheibe mit einem hitzebeständigen Trennmittel versehen und die beiden Einzelglasscheiben miteinander vertauscht werden, und daß das vorgebogene Glasscheibenpaar mit der innen liegenden eingebrannten Farbschicht auf einer der endgültigen Form der Außenglasscheibe entsprechenden ringförmigen Biegeform gemeinsam in die endgültige Form gebogen werden.

2. Verfahren nach Anspruch 1, dadurch gekennzeichnet, daß zum Vorbiegen des Glasscheibenpaares eine ringförmige Biegeform verwendet wird, deren Biegefläche der endgültigen Form der an der Zwischenschicht anliegenden Oberfläche der Innenglasscheibe entspricht.

3. Anwendung des Verfahrens nach Anspruch 1 oder 2 zum Herstellen von gebogenen Verbundglasscheiben mit einem auf der an der thermoplastischen Zwischenschicht anliegenden Oberfläche der Außenscheibe angeordneten Dekorrahmen.

4. Anwendung des Verfahrens nach Anspruch 1 oder 2 zum Herstellen von gebogenen elektrisch beheizbaren Verbundglasscheiben mit auf der an der thermoplastischen Zwischenschicht anliegenden Oberfläche der Außenscheibe angeordneten eingebrannten Stromzuführungselektroden für eine anschließend nach einem Vakuumverfahren aufgebrachte transparente Leitschicht.

5. Anwendung des Verfahrens nach Anspruch 1 oder 2 zum Herstellen von gebogenen elektrisch beheizbaren Verbundglasscheiben mit auf der an der thermoplastischen Zwischenschicht anliegenden Oberfläche der Außenscheibe angeordneten aufgedruckten und eingebrannten Heizleitern.
